# EUROPÄISCHE PATENTANMELDUNG

(11) **EP 4 477 347 A1**
(43) Veröffentlichungstag der Anmeldung: **18.12.2024**
(21) Anmeldenummer: 23179443.9
(22) Anmeldetag: 15.06.2023
(51) Int. Cl.: B23K 26/06, B23K 26/082, B23K 26/38, G02B 26/08

(54) **LASERBEARBEITUNGSVORRICHTUNG UND LASERBEARBEITUNGSVERFAHREN ZUR BEARBEITUNG EINES WERKSTÜCKS**

(71) Anmelder: Bystronic Laser AG, 3362 Niederönz (CH)
(72) Erfinder: MUMENTHALER, Martin, 4938 Rohrbach (CH); LUEDI, Andreas, 3400 Burgdorf (CH)
(74) Vertreter: Patentanwälte Geyer, Fehners & Partner mbB

(57) **Zusammenfassung**

Es wird eine Laserbearbeitungsvorrichtung und ein Laserbearbeitungsverfahren zur Bearbeitung eines Werkstücks 12 angegeben. Die Laserbearbeitungsvorrichtung beinhaltet einen Laserbearbeitungskopf (100) mit einem Gehäuse (102), das eine Schnittstelle (107) zum Ankoppeln einer Laserquelle für einen Bearbeitungslaserstrahl (104) und eine Austrittsöffnung (108) für den Bearbeitungslaserstrahl aufweist; und einem optischen System (103) zum Formen des Bearbeitungslaserstrahls und Führen des Bearbeitungslaserstrahls auf einem optischen Pfad (30) mit einer Gesamtlänge zwischen der Schnittstelle (107) und der Austrittsöffnung (108). Das optische System (103) beinhaltet einen ersten und einen zweiten ortsfesten, verformbaren Spiegel (21a, 21b), die jeweils derart angeordnet sind, dass sie den Bearbeitungslaserstrahl jeweils in einem Winkel (α1, α2) umlenken. Das Verhältnis der Gesamtlänge des optischen Pfades (30) zwischen der Austrittsöffnung (108) und der Schnittstelle (107) zum Ankoppeln der Laserquelle zur räumlichen Ausdehnung (D) des Gehäuses (102) parallel zu der zentralen Achse (A) der Austrittsöffnung (108) liegt im Bereich von 2 bis 4,5.

## Beschreibung

Die Erfindung betrifft eine Laserbearbeitungsvorrichtung zur Laserbearbeitung eines Werkstücks, ein Laserbearbeitungsverfahren zur Laserbearbeitung eines Werkstücks und ein Computerprogrammprodukt.

Zum Bearbeiten von metallischen Werkstoffen werden zunehmend Laser eingesetzt, insbesondere Festkörperlaser, wie Faserlaser oder Scheibenlaser. Dabei sind Laserquellen mit Leistungen von bis zu 50 kW und mehr im Einsatz. Primäre Laserbearbeitung von metallenen Werkstoffen sind z.B. Schneiden, Schweißen, Härten und additive Fertigung. Zur Materialbearbeitung wird die Laserstrahlung zum Bearbeitungsort, auch Prozesszone genannt, auf dem Werkstück geführt und für die Bearbeitung geformt. Bei einigen Laserbearbeitungsvorrichtungen wird die Laserstrahlung über eine Transportfaser in einen Bearbeitungskopf der Laserbearbeitungsvorrichtung geführt. Der Bearbeitungskopf wird bei der Bearbeitung über das Werkstück geführt und unterliegt dabei typischerweise großen Beschleunigungen. Eine kompakte Bauweise des Bearbeitungskopfes ist daher wünschenswert. Insbesondere in der Einstrahlrichtung des Bearbeitungslaserstrahls auf das Werkstück können die Platzverhältnisse, z.B. durch die Maschinenhöhe oder eine Bearbeitungszelle, begrenzt sein.

Der Bearbeitungskopf befindet sich während der Bearbeitung des Werkstücks typischerweise in der Nähe der heißen Prozesszone und ist zudem ständiger potenzieller Kontamination durch kleinste, aus der Bearbeitung resultierende Schmutzpartikel ausgesetzt. Andererseits wird im Bearbeitungskopf der Laserstrahl für die beabsichtigte Bearbeitung geformt. Dies kann typischerweise im Freistrahl, d.h. bei einem sich in einer gasförmigen Umgebung oder in einem Vakuum ausbreitenden Strahl, bewerkstelligt werden. Ein Laserstrahl im Freistrahl mit den dabei meistens zur Strahlformung eingesetzten Linsen ist besonders gegenüber Verschmutzung empfindlich. Eine kleinste Kontamination an einer Linsenoberfläche kann aufgrund der eingesetzten hohen Laserleistungen bereits zum Ausfall eines Bearbeitungskopfes führen. Kontaminationen können nicht nur von außen, sondern auch aus dem Inneren des Bearbeitungskopfes stammen. Werden Linsen oder andere optische Elemente für die Fokuslagenverstellung oder für eine veränderte Magnifikation verstellt, so kann es aufgrund der mechanischen Bewegung zu kontaminierenden Abrieb kommen.

Mit dem Begriff "Magnifikation" ist vorliegend das optische Abbildungsverhältnis zwischen dem Laserstrahl, der den Bearbeitungskopf verlässt, zu dem Laserstrahl, der in den Bearbeitungskopf eintritt, gemeint. Wird der Laserstrahl von der Laserquelle in einem Lichtleiter, z.B. in einer Transportfaser, zum Bearbeitungskopf geführt, so ist der Durchmesser des Laserstrahls beim Eintritt in den Bearbeitungskopf gleich dem Durchmesser des Lichtleiters. In diesem Fall beschreibt die Magnifikation des Bearbeitungskopfes, d.h. die Magnifikation des optischen Systems des Bearbeitungskopfes, das Abbildungsverhältnis des Durchmessers des Laserstrahls an der Austrittsöffnung des Bearbeitungskopfs zum Durchmesser des Lichtleiters.

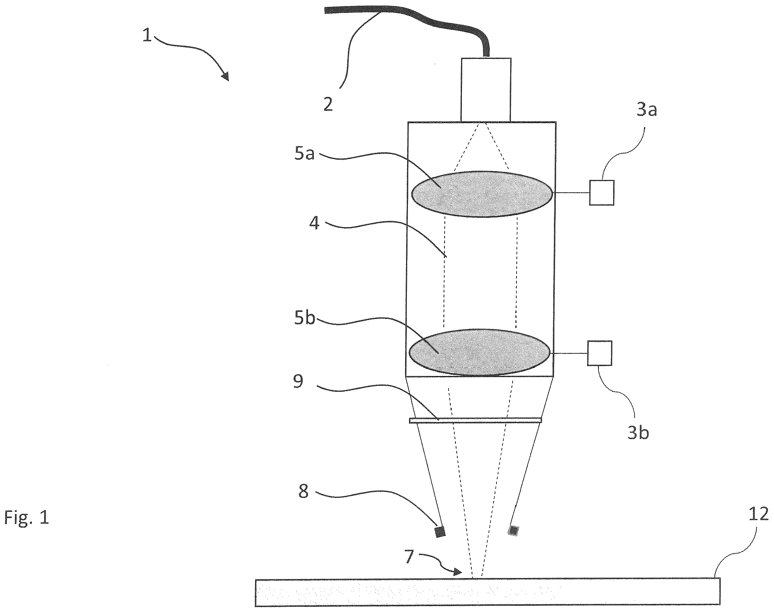

Ein typischer Laserbearbeitungskopf 1 ist schematisch in Fig. 1 gezeigt, mit einer Transportfaser 2, verschiebbare Linsen 5a, 5b, Linsenverschiebungsmechaniken 3a, 3b, einem Laserstrahl 4, der als Freistrahl bereitgestellt wird, dem zu bearbeitenden Werkstück 12, der Austrittsöffnung 8 und dem Bearbeitungsort 7. In einigen Beispielen wird der Innenraum des Bearbeitungskopfes 1 mit einem optionalen austauschbaren Schutzglas 9 abgeschirmt. Das Schutzglas schützt die empfindliche Optik des Bearbeitungskopfes vor Kontaminationen. Der in Fig. 1 gezeigte prinzipielle Aufbau entspricht einem typischen und weitverbreiteten Bearbeitungskopf. Mit dem Brennweitenverhältnis der Fokussierlinse 5b zu Kollimationslinse 5a wird die Grundeinstellung der Magnifikation eingestellt. Das Verhältnis der Brennweiten der Fokussierlinse 5b und der Kollimationslinse 5a kann z.B. im Bereich von 2 bis 3,4 liegen. Mit Verschieben der Linsen 5a, 5b parallel zu der Ausbreitungsrichtung des Laserstrahls 4 kann die Magnifikation und/oder die Fokuslage des Laserstrahls relativ zur Austrittsöffnung 8 verändert werden. Bearbeitungsköpfe können mehr als zwei Linsen beinhalten. Bei Bearbeitungsköpfen, mit welchen sowohl die Magnifikation wie auch die Fokuslage verändert werden kann, sind typischerweise mindestens zwei Linsen verschiebbar ausgestaltet. Es sei erwähnt, dass nicht alle Bearbeitungsköpfe mit einer Möglichkeit zur Verstellung der Magnifikation ausgestaltet sind. Hingegen ist typischerweise in Bearbeitungsköpfen eine Möglichkeit zur Verstellung der Fokuslage vorgesehen. Denn die Lage des Fokus beim Bearbeitungsort 7 kann die Prozessqualität beeinflussen oder bestimmen. Abhängig von Prozessparametern, wie die Dicke oder das Material des Werkstücks oder die Zusammensetzung des Prozessgases, werden andere Fokuslagen eingesetzt.

Ein Bearbeitungskopf wie in Fig. 1 gezeigt ist in mehrfacher Hinsicht nachteilig. Zum einen wird durch das Bewegen oder Verschieben von optischen Elementen, wie z.B. die Linsen 5a und 5b, mechanischer Abrieb generiert. Der Abrieb kann die optischen Oberflächen kontaminieren. Weiter sind transmissive optische Elemente, wie die Linsen 5a und 5b, besonders empfindlich auf Verschmutzungen. Denn kontaminierte Stellen an transmissiven Oberflächen werden aufgrund der Strahlung absorbierenden Kontaminationen lokal sehr stark erhitzt. Dies bewirkt, dass sich der Brechungsindex an dieser Stelle stark ändert und ein großer Brechungsindexgradient zur Umgebung entsteht. Diese lokal stark veränderte Lichtbrechung kann die Laserstrahlformung meistens so stark beinträchtigen, dass der Bearbeitungskopf unbrauchbar werden kann. Transmissive optische Elemente, insbesondere die oft verwendeten Quarzoptiken, können nur schlecht gekühlt werden und besitzen eine niedrige Wärmeleitfähigkeit, weshalb sich Kontaminationen lokal sehr stark erhitzen und es zu Einbränden in optischen Elementen kommen kann.

Es wurde daher versucht, Bearbeitungsköpfe ohne verschiebbare Linsen zu entwickeln. So hat LaserMech den Bearbeitungskopf FiberCut HR entwickelt, in welchem keine transmissiven optischen Elemente zur Fokuslagenanpassung bewegt werden müssen, vgl. FiberCUTO HR - Laser Mechanisms, Inc. Der Laserstrahl wird über starre, gekrümmte, wassergekühlte metallische Spiegel gelenkt. Eine Verstellung der Fokuslage wird bei diesem Kopf durch Verändern der Distanz zwischen der Austrittsöffnung und dem Schutzglas des Bearbeitungskopfs bewerkstelligt. Ein weiteres Beispiel eines Bearbeitungskopfes ohne bewegte transmissive optische Elemente ist der FC4 Laser cutting head von LT Ultra, vgl. 2D (solid state) - LT Ultra Precision Technology GmbH (It-ultra.com). Dieser Schneidkopf setzt einen Spiegel mit variabler Spiegelkrümmung ein. Die aufgeführten Beispiele können jedoch lediglich die Fokuslage des Bearbeitungslaserstrahles verstellen. Weitere Beispiele, in welchen vorzugsweise auf transmissive Optiken verzichtet wird, sind aus EP3747588 A1 und EP3980216 A1 bekannt, die reflektierende optische Einheiten in einem Schneidkopf offenbaren.

Aufgabe ist es, eine Laserbearbeitungsvorrichtung und ein Laserbearbeitungsverfahren bereitzustellen, die unter Vermeidung von Kontaminationen eine Modifizierung einer Fokuslage des Bearbeitungslaserstrahls und einer Magnifikation des optischen Systems ermöglichen.

Diese Aufgabe wird gelöst durch eine Laserbearbeitungsvorrichtung zur Laserbearbeitung eines Werkstücks nach Anspruch 1, ein Laserbearbeitungsverfahren zum Laserbearbeiten eines Werkstücks nach Anspruch 10 und ein Computerprogrammprodukt nach Anspruch 15.

Eine Ausführungsform betrifft eine Laserbearbeitungsvorrichtung zur Laserbearbeitung eines Werkstücks, insbesondere zum Laserschneiden, beinhaltend einen Laserbearbeitungskopf mit einem Gehäuse, das eine Schnittstelle zum Ankoppeln einer Laserquelle für einen Bearbeitungslaserstrahl und eine Austrittsöffnung für den Bearbeitungslaserstrahl aufweist; und einem optischen System zum Formen des Bearbeitungslaserstrahls und Führen des Bearbeitungslaserstrahls auf einem optischen Pfad mit einer Gesamtlänge zwischen der Schnittstelle und der Austrittsöffnung; wobei das Gehäuse das optische System umschließt und eine räumliche Ausdehnung parallel zu einer zentralen Achse der Austrittsöffnung besitzt; das optische System einen ersten ortsfesten, verformbaren Spiegel, und einen zweiten ortsfesten, verformbaren Spiegel, aufweist, die jeweils derart angeordnet und/oder ausgebildet sind, dass sie den Bearbeitungslaserstrahl jeweils in einem Winkel umlenken; und das Verhältnis der Gesamtlänge des optischen Pfades zwischen der Austrittsöffnung und der Schnittstelle zum Ankoppeln der Laserquelle zur räumlichen Ausdehnung des Gehäuses parallel zu der zentralen Achse der Austrittsöffnung im Bereich von 2 bis 4,5, bevorzugt 3 bis 4, liegt.

Überraschender Weise ermöglicht die vorstehende Ausführungsform eine Modifizierung sowohl der Fokuslage des Bearbeitungslaserstrahls als auch der Magnifikation des optischen Systems unter Vermeidung von Kontaminationen des Bearbeitungskopfes, insbesondere des optischen Systems. Die Modifizierung sowohl der Fokuslage des Bearbeitungslaserstrahls als auch der Magnifikation des optischen Systems erfolgt mittels der ersten und zweiten ortsfesten, verformbaren Spiegel ohne Verschieben optischer Elemente und somit unter Vermeidung von daraus resultierendem Abrieb. Gleichzeitig kann der Bearbeitungslaserstrahl durch die ersten und zweiten ortsfesten, verformbaren Spiegel flexibel geformt werden. Ein relativ langer optischer Pfad zwischen der Schnittstelle zum Ankoppeln der Laserquelle und der Austrittsöffnung des Bearbeitungskopfes wird mittels Strahlfaltung an den ersten und zweiten verformbaren Spiegeln kompensiert. So kann die räumliche Ausdehnung des optischen Pfads des Bearbeitungslaserstrahls parallel zu der zentralen Achse der Austrittsöffnung aufgrund von Änderungen der Fortpflanzungsrichtung des Bearbeitungslaserstrahls gering sein. Auf diese Weise resultiert ein kompakter Bearbeitungskopf, der insbesondere parallel zu der zentralen Achse der Austrittsöffnung eine geringe räumlicher Ausdehnung besitzt. In einigen Abwandlungen der Ausführungsform kann das Verhältnis der Gesamtlänge des optischen Pfades zur räumlichen Ausdehnung des Gehäuses parallel zu der zentralen Achse der Austrittsöffnung mehr als 2 betragen, bevorzugt im Bereich von 2,1 bis 10.

In allen Ausführungsformen kann der erste verformbare Spiegel und/oder der zweite verformbare Spiegel jeweils ein Spiegel mit verstellbarem Krümmungsradius, auch Spiegel mit variablem Krümmungsradius oder VRM genannt, sein. Mindestens ein Spiegel ausgewählt aus dem ersten verformbaren Spiegel, dem zweiten verformbaren Spiegel und mindestens einem weiteren verformbaren Spiegel und/oder deren jeweiliger Krümmungsradius können dynamisch mit Frequenzen im Bereich von 20 bis 100 Hz verformbar oder verstellbar sein. Der mindestens eine Spiegel, insbesondere der erste verformbare Spiegel und/oder der zweite verformbare Spiegel, kann jeweils innerhalb von einigen Millisekunden, z.B. in 1 ms bis 200 ms, bevorzugt in 1 ms bis 50 ms, verformbar oder verstellbar sein. Dabei kann ein Krümmungsradius des mindestens einen Spiegels im Bereich von -1,5 m bis +1,5 m, bevorzugt - 2,8 m bis + 2,8 m, mehr bevorzugt -3 m bis +3 m liegen. Zum Beispiel kann ein Vollhub von einem Krümmungradius von -3 m zu einem Krümmungsradius von +3 m oder umgekehrt in ungefähr 20 ms bewerkstelligt werden. Mit den verformbaren Spiegeln, insbesondere mit den Spiegeln mit variablen Krümmungsradius, kann eine aberrationsarme Ablenkung des Bearbeitungslaserstrahls realisiert werden.

In allen Ausführungsformen kann die Gesamtlänge des optischen Pfades im Bereich von 1000 mm bis 2500 mm, bevorzugt 1400 mm bis 1900 mm, liegen. Die räumliche Ausdehnung des Gehäuses parallel zu der zentralen Achse der Austrittsöffnung kann im Bereich von 300 mm bis 700 mm, bevorzugt 400 mm bis 600 mm, liegen. Der Abschnitt des optischen Pfades zwischen dem ersten und dem zweiten verformbaren Spiegel kann eine Länge von mindestens 300 mm, bevorzugt im Bereich von 700 bis 1100 mm besitzen. In Abwandlungen von Ausführungsformen kann der Abschnitt des optischen Pfades, insbesondere der minimale Abschnitt des optischen Pfades, zwischen dem ersten verformbaren Spiegel, dem zweiten verformbaren Spiegel und/oder einem weiteren ortsfesten, verformbaren Spiegel zwischen 280 mm und 350 mm, bevorzugt zwischen 150 mm und 450 mm betragen.

In allen Ausführungsformen kann ein Krümmungsradius des ersten Spiegels und/oder ein Krümmungsradius des zweiten Spiegels im Bereich von -1,5 m bis +1,5 m, bevorzugt - 2,8 m bis + 2,8 m, mehr bevorzugt -3 m bis +3 m liegen. Dies ist insbesondere dann von Vorteil, wenn der erste und/oder der zweite Spiegel jeweils als ein VRM, d.h. als ein Spiegel mit variablem Krümmungsradius, ausgebildet sind, aufgrund der mechanischen Eigenschaften der VRMs, insbesondere Elastizitätsmodul und Materialermüdung. Ferner kann der Winkel, mit dem der erste und/oder der zweite Spiegel den Bearbeitungslaserstrahl umlenken, ein Winkel kleiner 90° sein. Der Winkel kann ein spitzer Winkel im Bereich von 5,5° bis 12,5°, bevorzugt 7,5° bis 10,5° sein. Dadurch wird eine aberrationsarme Ablenklung ermöglicht. Mit einem spitzen UmlenkWinkel kann die Spiegeloberfläche, wenn sie verformt wird, nahezu sphärisch verformt werden, ohne dass große unerwünschte Astigmatismen und/oder Aberrationen in den Bearbeitungslaserstrahl gebracht werden.

Das Verhältnis der räumlichen Ausdehnung des Gehäuses parallel zu der zentralen Achse der Austrittsöffnung zur Länge des Abschnitts des optischen Pfades zwischen dem ersten und dem zweiten verformbaren Spiegel kann im Bereich von 0,33 bis 0,9, bevorzugt 0,4 bis 0,7, liegen.

Der erste und der zweite verformbare Spiegel, insbesondere Aktuatoren des ersten und des zweiten verformbaren Spiegels, können zum Verstellen des jeweiligen Krümmungsradius individuell und/oder aufeinander abgestimmt ansteuerbar ausgebildet sein. In der Laserbearbeitungsvorrichtung kann eine Steuereinheit zum Ansteuern des ersten und des zweiten Spiegels, insbesondere zum Ansteuern der Aktuatoren des ersten und des zweiten Spiegels, vorgesehen sein. In der Laserbearbeitungsvorrichtung und/oder in der Steuereinheit kann eine Speichereinrichtung, insbesondere eine Speichereinrichtung für Programmmodule eines Computerprogrammprodukts, vorgesehen sein.

Der erste und/oder der zweite verformbare Spiegel können derart verformbar sein, dass mindestens ein Element ausgewählt aus der Divergenz des Bearbeitungslaserstrahls und dem Durchmesser des Bearbeitungslaserstrahls verändert wird. Das Gehäuse kann ausschließlich das optische System beinhalten. Der erste und der zweite Spiegel können ferner ausgebildet sein, den Bearbeitungslaserstrahl zumindest teilweise zu reflektieren und/oder zumindest teilweise umzulenken.

Mindestens ein Element ausgewählt aus dem optischen System und der Steuereinheit können derart ausgebildet sein, dass durch Verstellen mindestens eines der Krümmungsradii des ersten und des zweiten verformbaren Spiegels, insbesondere ausschließlich durch Verstellen mindestens eines der Krümmungsradii des ersten und des zweiten verformbaren Spiegels, eine Fokuslage des Bearbeitungslaserstrahls und eine Magnifikation des optischen Systems modifiziert wird. Ferner kann mindestens ein Element ausgewählt aus dem optischen System und der Steuereinheit derart ausgebildet sein, dass eine Veränderung der jeweiligen Krümmung des ersten und/oder des zweiten Spiegels mit mindestens 2,3 (m s)-'erfolgt. Die Krümmung ist in einigen Ausführungsformen als der Kehrwert des Krümmungsradius, also als 1/Krümmungsradius, definiert. Beispielsweise kann ein Vollhub von einer Krümmung von -0,3 m⁻¹ bis zu einer Krümmung von +0,3 m⁻¹ in weniger als 250 ms erfolgen. Daraus resultiert eine Veränderung der Krümmung von 2,4 (m s)⁻¹.

Mindestens ein Element ausgewählt aus dem optischen System und der Steuereinheit können derart ausgebildet sein, dass die Fokuslage des Bearbeitungslaserstrahls am Bearbeitungsort in einem Bereich von -90 mm bis +110 mm, bevorzugt -40 mm bis +40 mm, verstellbar ist, und/oder die Magnifikation des optischen Systems in einem Bereich von 1,4 bis 4,8, bevorzugt 1,7 bis 3,8, verstellbar ist.

Das optische System kann ausschließlich optische Elemente enthalten, die jeweils, insbesondere in Fortpflanzungsrichtung des Bearbeitungslaserstrahls, ortsfest sind. Das optische System kann ein oder mehrere weitere optische Elemente enthalten, ausgewählt aus einem Spiegel, einem adaptiven Spiegel, einem Umlenkspiegel, einer Linse und einer Faserendkappe, die jeweils ortsfest sind. Zwischen dem ersten und dem zweiten Spiegel kann mindestens ein optisches Element ausgewählt aus mindestens einem ortsfesten planen Spiegel, mindestens einem ortsfesten adaptiven Spiegel und mindestens einem weiteren ortsfesten, verformbaren Spiegel vorgesehen sein. Der Abschnitt des optischen Pfades zwischen dem mindestens einen weiteren ortsfesten, verformbaren Spiegel und mindestens einem benachbart angeordneten Spiegel ausgewählt aus dem ersten ortsfesten verformbaren Spiegel, dem zweiten ortsfesten verformbaren Spiegel und einem anderen der weiteren ortsfesten verformbaren Spiegel kann jeweils eine Länge im Bereich von 150 mm bis 450 mm, bevorzugt 280 mm bis 350 mm, besitzen.

Durch Vorsehen mindestens eines ortsfesten optischen Elements zwischen dem ersten und dem zweiten Spiegel kann der optische Pfad zwischen dem ersten und dem zweiten Spiegel in optische Teilpfade unterteilt sein. Die räumliche Ausdehnung des optischen Pfads des Bearbeitungslaserstrahls parallel zu der zentralen Achse der Austrittsöffnung kann auf diese Weise durch zusätzliche wiederholte Änderungen der Fortpflanzungsrichtung des Bearbeitungslaserstrahls, d.h. durch eine zusätzliche Strahlfaltung, minimiert sein. Dadurch kann trotz großer Länge des optischen Pfades eine reduzierte Bauhöhe des Bearbeitungskopfes erreicht werden, insbesondere eine reduzierte räumliche Ausdehnung des Gehäuses parallel und/oder senkrecht zu der zentralen Achse der Austrittsöffnung.

In einigen Abwandlungen kann an der Schnittstelle eine Laserquelle für den Bearbeitungslaserstrahl angekoppelt sein. Ferner kann das Gehäuse weitere Schnittstellen zum Ankoppeln weiterer Bauteile, insbesondere eine Kamera zur Prozessbeobachtung und/oder eine Lichtquelle für ein Beleuchtungslicht, aufweisen.

Eine weitere Ausführungsform betrifft ein Laserbearbeitungsverfahren zur Laserbearbeitung eines Werkstücks, insbesondere zum Laserschneiden, mit einer Laserbearbeitungsvorrichtung nach der vorstehenden Ausführungsform oder Abwandlungen davon, mit den Schritten Erzeugen eines Bearbeitungslaserstrahls mit einer an der Schnittstelle des Gehäuses des Laserbearbeitungskopfs angekoppelten Laserquelle; Formen des Bearbeitungslaserstrahls und Führen des Bearbeitungslaserstrahls mit dem optischen System auf dem optischen Pfad mit einer Gesamtlänge zwischen der Schnittstelle und der Austrittsöffnung des Laserbearbeitungskopfes; Verstellen mindestens einen der Krümmungsradii des ersten ortsfesten, verformbaren Spiegels und des zweiten ortsfesten, verformbaren Spiegels; Umlenken des Bearbeitungslaserstrahls an dem ersten verformbaren Spiegel und dem zweiten verformbaren Spiegel jeweils in einem Winkel; und Bearbeiten des Werkstücks mit dem Bearbeitungslaserstrahl.

In dem Verfahren kann das Verhältnis der Gesamtlänge des optischen Pfades zur räumlichen Ausdehnung des Gehäuses parallel zu der zentralen Achse der Austrittsöffnung im Bereich von 2 bis 4,5, bevorzugt 2,5 bis 4, liegen. Der Abschnitt des optischen Pfades zwischen dem ersten und dem zweiten verformbaren Spiegel kann eine Länge von mindestens 300 mm, bevorzugt im Bereich von 700 bis 1100 mm besitzen. Als der Winkel, mit dem der erste und/oder der zweite Spiegel den Bearbeitungslaserstrahl umlenken, kann ein spitzer Winkel im Bereich von 5,5° bis 12,5°, bevorzugt 7,5° bis 10,5° gewählt werden oder voreingestellt sein.

Der erste und der zweite Spiegel, insbesondere Aktuatoren des ersten und des zweiten Spiegels, können zum Verstellen des jeweiligen Krümmungsradius individuell und/oder aufeinander abgestimmt, insbesondere mit der Steuereinheit, angesteuert werden. Der erste und/oder der zweite verformbare Spiegel können derart verformt werden, dass mindestens ein Element ausgewählt aus der Divergenz des Bearbeitungslaserstrahls und dem Durchmesser des Bearbeitungslaserstrahls verändert wird.

Durch Verstellen mindestens eines der Krümmungsradii des ersten und des zweiten verformbaren Spiegels, insbesondere ausschließlich durch Verstellen mindestens eines der Krümmungsradii des ersten und des zweiten verformbaren Spiegels, kann eine Fokuslage des Bearbeitungslaserstrahls und eine Magnifikation des optischen Systems modifiziert werden. Ferner kann eine Veränderung der jeweiligen Krümmung des ersten und/oder des zweiten Spiegels mit mindestens 2,3 (m s)⁻¹ erfolgen.

Die Fokuslage des Bearbeitungslaserstrahls kann in einem Bereich von -90 mm bis +110 mm, bevorzugt -40 mm bis +40 mm, verstellt werden. Die Magnifikation des optischen Systems kann in einem Bereich von 1,4 bis 4,8, bevorzugt 1,7 bis 3,8, verstellt werden. Die räumliche Ausdehnung des optischen Pfads des Bearbeitungslaserstrahls parallel zu der zentralen Achse der Austrittsöffnung kann durch wiederholte Änderungen der Fortpflanzungsrichtung des Bearbeitungslaserstrahls minimiert werden.

Eine andere Ausführungsform betrifft ein Computerprogrammprodukt, beinhaltend ein oder mehrere Programmmodule, die bewirken, dass die Vorrichtung nach der vorstehenden Ausführungsform oder Abwandlungen davon Schritte des Laserbearbeitungsverfahrens nach der vorstehenden Ausführungsform oder Abwandlungen davon ausführt, insbesondere wenn die Programmmodule in eine Speichereinrichtung der Vorrichtung geladen werden.

Die Ausführungsformen oder Abwandlungen der Laserbearbeitungsvorrichtung können in den Ausführungsformen oder Abwandlungen des Verfahrens zum Laserbearbeiten eines Werkstücks genutzt werden. Das Werkstück kann mindestens ein Metall enthalten, also metallisch sein, und/oder die Form eines Bleches besitzen. Mit den vorstehenden Ausführungsformen des Verfahrens zum Laserbearbeiten eines Werkstücks können die gleichen Vorteile und Funktionen realisiert werden, wie mit den Ausführungsformen der Laserbearbeitungsvorrichtung, insbesondere mit gleichlautenden und/oder analogen Merkmalen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch einen typischen Laserbearbeitungskopf 1;
- Fig. 2a und 2b: schematisch jeweils einen beispielhaften verformbaren Spiegel;
- Fig. 3a: schematisch als ein Beispiel einen Laserbearbeitungskopf 100;
- Fig. 3b: schematisch als ein Beispiel eine Laserbearbeitungsvorrichtung 10;
- Fig. 4: schematisch als ein Beispiel einen Laserbearbeitungskopf 200;
- Fig. 5: schematisch als ein Beispiel einen Laserbearbeitungskopf 300;
- Fig. 6: einen Bereich 116, in dem mit dem Laserbearbeitungskopf 100 die Magnifikation und die Lage des Fokus verstellt werden kann; und
- Fig. 7: Bereiche 116a, 116b, 116c, in denen mit einem jeweils modifizierten Laserbearbeitungskopf 100 die Magnifikation und die Lage des Fokus verstellt werden können.

In allen Ausführungsformen, Abwandlungen davon oder Beispielen kann das Material des Werkstücks mindestens ein Metall beinhalten. Das Werkstück kann ferner als ein Blech geformt sein. Der Begriff "Ankoppeln einer Laserquelle" kann ein direktes Ankoppeln der Laserquelle oder ein Ankoppeln einer optischen Transportfaser und/oder einer Faserendkappe einer optischen Transportfaser, die mit der Laserquelle verbunden sind, beinhalten. Die Laserquelle kann ausgebildet sein, den Bearbeitungslaserstrahl mit einer Wellenlänge im Bereich von 400 nm bis 1500 nm und/oder mit einer Leistung von mindestens 1kW, bevorzugt 1 bis 50 kW, zu erzeugen. Der erste ortsfeste, verformbare Spiegel kann synonym als erster verformbarer Spiegel oder als erster Spiegel bezeichnet werden. Der zweite ortsfeste, verformbare Spiegel kann synonym als zweiter verformbarer Spiegel oder als zweiter Spiegel bezeichnet werden. Der Begriff "verformbar" kann synonym als "verstellbar" bezeichnet werden. Für den Begriff "Laserbearbeitungskopf" wird synonym auch der Begriff "Bearbeitungskopf" genutzt.

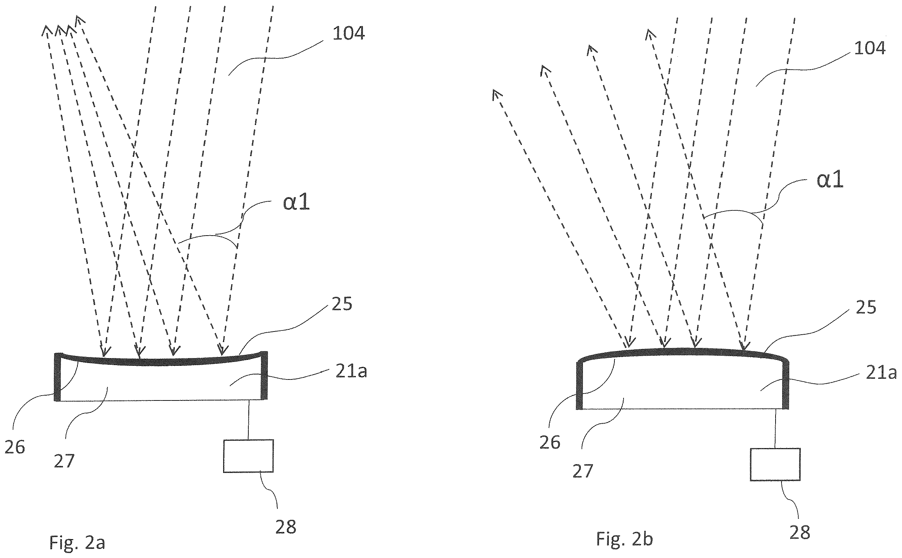

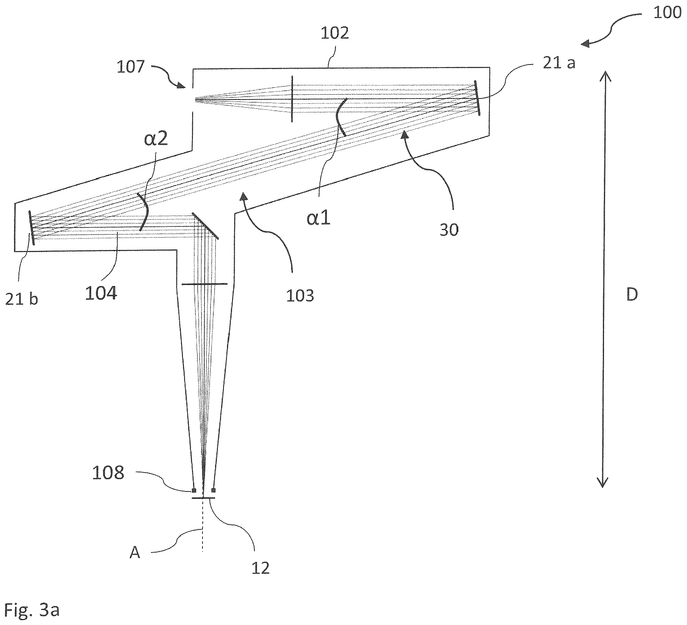

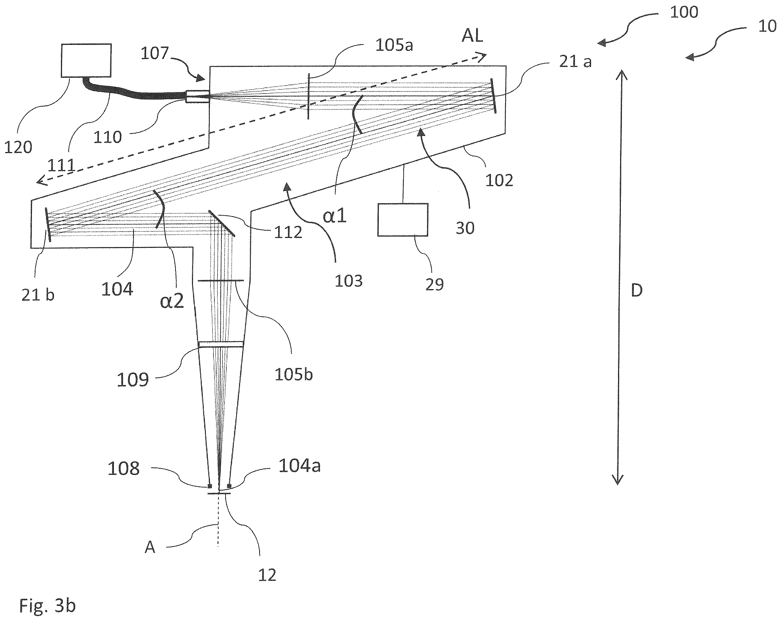

Fig. 2a und 2b zeigen schematisch beispielhaft einen verformbaren Spiegel 21a, der jeweils als der erste ortsfeste, verformbare Spiegel und/oder der zweite ortsfeste, verformbare Spiegel eingesetzt werden kann. Fig. 3a stellt schematisch einen Laserbearbeitungskopf 100 als ein Beispiel dar, der ein optisches System 103 beinhaltet, in dem zwei ortsfeste verformbare Spiegel 21a und 21b vorgesehen sind. Fig. 3b zeigt schematisch eine Laserbearbeitungsvorrichtung 10 mit dem Bearbeitungskopf 100, als ein Beispiel. Der Bearbeitungskopf 100 besitzt ein Gehäuse 102, in dem eine Schnittstelle 107 zur Ankopplung einer Laserquelle 120 für einen Bearbeitungslaserstrahl 104 und eine Austrittsöffnung 108 für den Bearbeitungslaserstrahl 104 vorgesehen ist. Die Schnittstelle 107 befindet sich im seitlichen Bereich an einem der Austrittsöffnung 108 entgegengesetzten Ende des Gehäuses 102.

Im vorliegenden Beispiel sind der erste und der zweite Spiegel 21a, 21b jeweils als ein VRM 21a, 21b, d.h. jeweils als ein Spiegel mit variablem Krümmungsradius, ausgebildet. Fig. 2a und 2b zeigen jeweils den VRM 21a als Prinzipdarstellung. Der VRM 21b ist gleicher Bauart. Der Spiegel 21a hat eine bewegliche Oberfläche 25, die als Membran 26 ausgebildet ist und welche den einfallenden Bearbeitungslaserstrahl 104 umlenkt. Zusätzlich kann der Spiegel 21a den Bearbeitungslaserstrahl 104 in seiner Strahldivergenz verändern.

Die Krümmung der Oberfläche 25 des VRM 21a wird beispielsweise durch ein flüssiges oder gasförmiges Fluid, welches an der Rückseite der Membran 26 anliegt, verändert. Zu diesem Zweck ist ein Aktuator 28 vorgesehen. Der Aktuator 28 kann beispielsweise eine mit einer Steuereinheit 29 des Bearbeitungskopfes 100 ansteuerbare Pumpe zur Regelung des Drucks des Fluids in einem an die Membran der Oberfläche 25 angrenzenden Fluidraum 27 des Spiegels 21a sein. Ferner kann ein Fluidreservoir (nicht gezeigt) an die Pumpe angeschlossen sein. Die Spiegelkrümmung, d.h. die Krümmung der Membran 26 und damit der Krümmungsradius der Oberfläche 25 ist dynamisch mittels des Aktuators 28 mit Frequenzen im Bereich von 20 bis 100 Hz veränderbar. Fig. 2a zeigt den Spiegel 21a mit konkaver Wölbung der Oberfläche 25, und Fig. 2b zeigt den Spiegel 21a mit konvexer Wölbung der Oberfläche 25. Die Steuereinheit 29 kann eine zentrale Steuereinheit der Laserbearbeitungsvorrichtung 10 sein, die mit allen ansteuerbaren Komponenten datenleitend verbunden ist, oder in der zentralen Steuereinheit enthalten sein.

Der Bearbeitungslaserstrahl 104 wird in dem in Fig. 2a, 2b dargestellten Beispiel des VRM 21a an der Oberfläche 25 mit einem kleinen Winkel α1, insbesondere mit einem spitzen Winkel α1, umgelenkt. An dem VRM 21b wird der Bearbeitungslaserstrahl 104 in einem kleinen, insbesondere spitzen, Winkel α2 umgelenkt. Damit geht vorteilhaft einher, dass der in Fig. 3a dargestellte Bearbeitungskopf 100, welcher aufgrund der begrenzten Krümmungsfähigkeit der VRMs 21a und 21b einen langen optischen Pfad 30 als Strahlengang aufweisen kann, kompakt gebaut werden kann. Aufgrund der kleinen, insbesondere spitzen, Winkeln α1 und α2 zwischen Einfalls- und Ausfalllaserstrahlen gelingt eine kompakte Bauweise des Bearbeitungskopfes 100 und eine geringe Bauhöhe desselben. Das heißt, der Bearbeitungskopf 100 besitzt eine geringe räumliche Ausdehnung D, dargestellt in Fig. 3a mit einem Pfeil, parallel zu einer zentralen Achse Ader Austrittsöffnung 108, trotz langem optischen Pfad zwischen der Schnittstelle 107 und der Austrittsöffnung 108. Durch Verformen der Oberfläche 25 der VRMs 21a und 21b, d.h. durch Verändern des Krümmungsradius des VRM 21a und/oder des VRM 21b, kann die Magnifikation des optischen Systems 103 des Bearbeitungskopfes 100 in einem Bereich um eine Grundeinstellung der Magnifikation verändert werden. Die optische Abbildung wird in diesem Beispiel im Wesentlichen durch die Länge des Abschnitts des optischen Pfades 30 zwischen den beiden VRMs 21a, 21b bestimmt.

Der Bearbeitungskopf 100 besitzt in einer Abwandlung des Beispiels, wie in Fig. 3b gezeigt, transmissive optische Elemente, namentlich eine Faserendkappe 110 einer Transportfaser 111, die mit der Laserquelle 120 der Laserbearbeitungsvorrichtung 10 verbunden ist, eine Kollimationslinse 105a sowie eine Fokussierlinse 105b, die jeweils ortsfest sind und zudem unbeweglich sind. Ferner sind ein ortsfester, unbeweglicher Umlenkspiegel 112 sowie ein Schutzglas 109 vorgesehen. Die zwei VRMs 21a und 21b sind in dieser Abwandlung im freien Bearbeitungslaserstrahl 104 zwischen Kollimationslinse 105a und Fokussierlinse 105b angeordnet. Für die optische Abbildung des optischen Systems 103 sind in dieser Abwandlung des Bearbeitungskopfes 100 sowohl das Verhältnis der Linsenbrennweiten, nämlich das Verhältnis der Brennweite der Fokussierlinse 105b zu der Brennweite der Kollimationslinse 105a, als auch die Länge des Abschnitts des optischen Pfades 30 zwischen den beiden VRMs 21a und 21b bestimmend. Mit dem Brennweitenverhältnis der Linsen 105a, 105b wird eine Grundeinstellung der Magnifikation eingestellt. Ein Fokus 104a des Bearbeitungslaserstrahls 104 ist in Fig. 3b beispielhaft im Bereich der Austrittsöffnung 108 angeordnet gezeigt.

In dem Beispiel der Fig. 3a und 3b können die VRMs 21a und 21b bis zu einem minimalen Krümmungsradius R von ±3 m verändert werden. Es ist eine Länge AL des Abschnitts des optischen Pfades 30 zwischen dem ersten verformbaren Spiegel 21a und dem zweiten verformbaren Spiegel 21b von mindestens 300 mm vorgesehen, dargestellt in Fig. 3b mit einem gestrichelten Pfeil. Durch geeignete Voreinstellung der Länge AL im Bereich von mindestens 300 mm können die Magnifikation und die Lage des Fokus 104a z.B. auf der Achse A vorteilhaft verändert werden. Die Lage des Fokus 104a wird auch Fokuslage genannt. Beispielsweise wird bei einem Laserstrahlschneiden ein Bereich der Magnifikation von mehr als ca. 1,7, z.B. ca. 1,7 bis ca. 3,8, und ein Verstellbereich der Fokuslage von ca. 40 mm eingestellt.

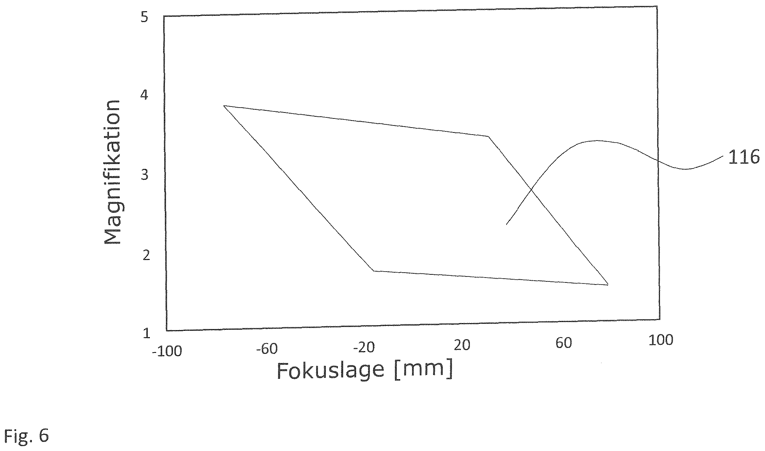

In den Beispielen der Fig. 3a und 3b besitzt die Kollimationslinse 105a eine Brennweite von 100 mm und die Fokussierlinse 105b eine Brennweite von 250 mm, was zu einer Grundeinstellung der Magnifikation von 2,5 führt. Mit einer Länge AL von 900 mm resultiert ein Verstellbereich der Magnifikation von 1,8 bis 3,7 bei einem mittleren Verstellbereich der Fokuslage von -20 mm von der Austrittsöffnung 108 nach oben bis +60 mm von der Austrittsöffnung 108 nach unten. Ein Bereich 116, in dem die Magnifikation und die Lage des Fokus 104a verstellt werden können, ist für das vorliegende Beispiel in Fig. 6 gezeigt. Der Bereich 116 ist ein Parameterbereich. Je nach Einstellung der Magnifikation können leicht unterschiedliche Fokuslagen angefahren werden. Der Verstellbereich der Fokuslage ist im vorliegenden Beispiel für jede Magnifikation zwischen 1,8 und 3,7 gross genug, um die Dicken eines als Blech geformten Werkstücks 12 unter 200 mm gut schneiden zu können.

Die Gesamtlänge des optischen Pfades 30 von der Schnittstelle 107 zur Austrittsöffnung 108, auch Laserpfadlänge genannt, liegt in den Beispielen der Fig. 3a, 3b bei 1500 mm. Trotz dieser beträchtlichen Gesamtlänge beträgt die Ausdehnung D des Gehäuses 102 des Bearbeitungskopfes 100 parallel zu der zentralen Achse Ader Austrittsöffnung 108 weniger als 400 mm. Das Verhältnis der Laserpfadlänge zur Ausdehnung D liegt somit bei vorteilhaften 3,75. Die Winkel α1 und α2 liegen jeweils zwischen 7,5° und 10,5°. Das Verhältnis der Ausdehnung D zur Länge AL beträgt ungefähr 0,44.

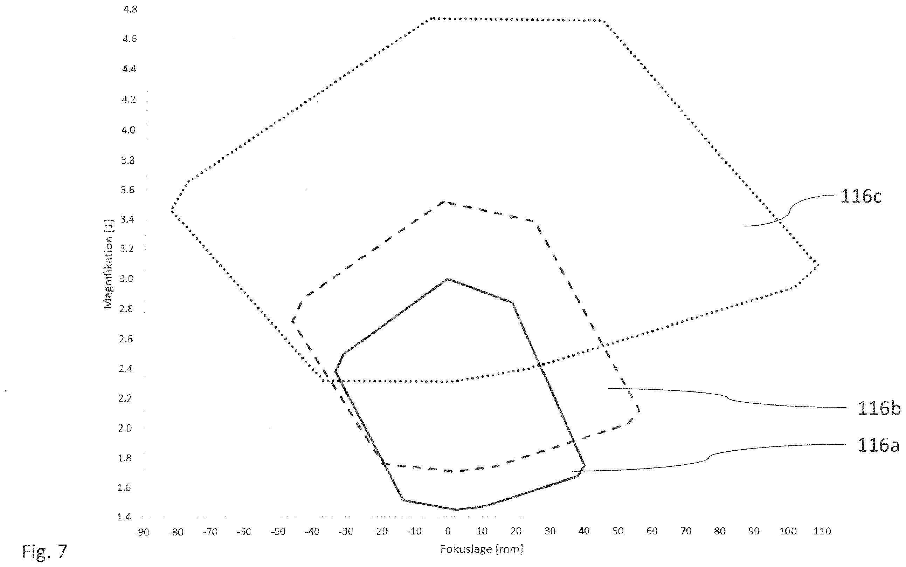

Der Laserbearbeitungskopf 100 der Fig. 3a, 3b kann wahlweise mit unterschiedlichen Linsenpaaren 105a, 105b, d.h. mit unterschiedlichen Grundeinstellungen der Magnifikation ausgestattet werden. Der Parameterbereich, in dem die Magnifikation und die Lage des Fokus 104a verstellt werden können, hängt von der Linsenkombination, d.h. von der Grundeinstellung der Magnifikation, ab. Eine veränderte Grundeinstellung der Magnifikation, d.h. ein verändertes Linsenpaar 105a, 105b und daher ein verändertes Verhältnis der Brennweite der Linse 105b zur Brennweite der Linse 105a, modifiziert diesen Bereich. Alternative Bereiche 116a, 116b, 116c, in denen die Magnifikation und die Lage des Fokus 104a verstellt werden können, sind in Fig. 7 dargestellt. Gezeigt ist ein Bereich 116a für eine Magnifikations-Grundeinstellung von 1,5 (ausgezogene Linie), ein Bereich 116b für eine Magnifikations-Grundeinstellung von 2,6 (gestrichelte Linie), sowie ein Bereich 116c für eine Magnifikations-Grundeinstellung von 3,6 (gepunktete Linie). Je grösser die Grundeinstellung der Magnifikation, umso grösser fällt auch der Bereich aus, in dem die Magnifikation und die Lage des Fokus 104a verstellt werden können. Der plane Umlenkspiegel 112 dient lediglich der Führung des Bearbeitungslaserstrahls 104 zur Austrittsöffnung 108 und hat keinen Einfluss auf die Strahlformung des Bearbeitungslaserstrahls 104.

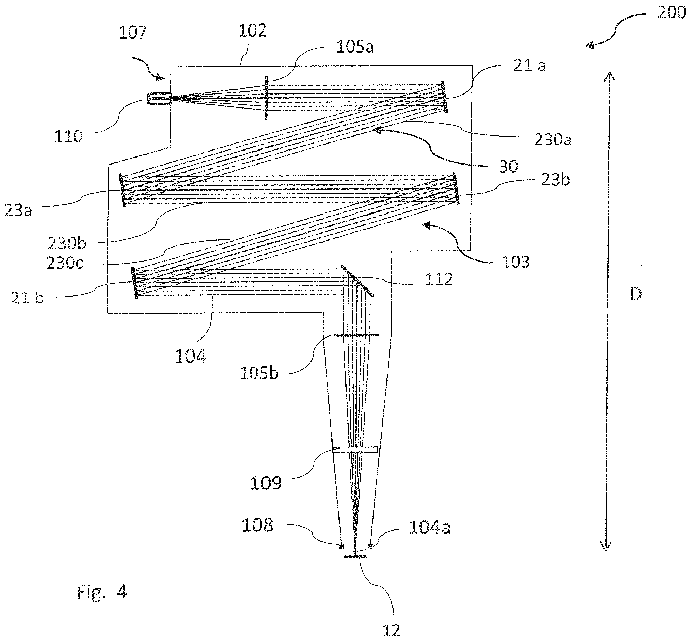

Als ein weiteres Beispiel ist in Fig. 4 ein Laserbearbeitungskopf 200 gezeigt. In diesem Beispiel sind zwei, in Fortpflanzungsrichtung des Bearbeitungslaserstrahls 104 hintereinander angeordnete, ortsfeste plane Umlenkspiegel 23a und 23b zwischen dem ersten Spiegel 21a und dem zweiten Spiegel 21b vorgesehen. Dadurch wird der optische Pfad 30 zwischen dem ersten und dem zweiten Spiegel 21a und 21b in optische Teilpfade 230a, 230b, 230c unterteilt. Ein Aufteilen des optischen Pfades 30 in derartige Teilpfade bewirkt, dass der Laserbearbeitungskopf 200 auch in einer Ausdehnung senkrecht zur Ausdehnung D kompakt gebaut werden kann, ohne dass der Teil des optischen Pfades 30, den der Bearbeitungslaserstrahl 104 zwischen den VRMs 21a und 21b zurücklegt, verkürzt werden muss. Die planen Umlenkspiegel 23a und 23b ändern lediglich die Fortpflanzungsrichtung des Bearbeitungslaserstrahls 104. Das Strahlprofil, die Strahlform und die Strahldivergenz des Bearbeitungslaserstrahls 104 bleiben bei Reflektion an den Umlenkspiegeln 23a und 23b unverändert erhalten. Auch mit der Bauform des Laserbearbeitungskopfes 200 beträgt die Ausdehnung D weniger als 500 mm. Das Verhältnis der Laserpfadlänge zu der Ausdehnung D liegt somit bei ungefähr 3. Weiter liegt das Verhältnis der Ausdehnung D zur Länge AL bei 0,55.

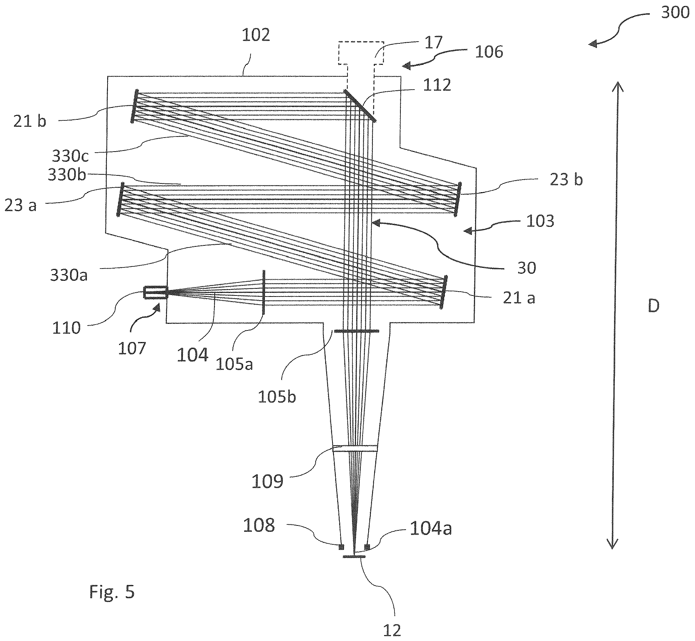

Ein Laserbearbeitungskopf 300 ist als ein weiteres Beispiel in Fig. 5 gezeigt. Die Schnittstelle 107 befindet sich im Unterschied zu den vorstehend beschriebenen Beispielen in einem der Austrittsöffnung 108 benachbarten seitlichen Bereich des Gehäuses 102. Der optische Pfad 30 zwischen dem ersten Spiegel 21a und dem zweiten Spiegel 21b ist in diesem Beispiel in optische Teilpfade 330a, 330b und 330c unterteilt. Dies erfolgt durch Anordnen der zwei planen Umlenkspiegeln 23a und 23b hintereinander in dem optischen Pfad 30 zwischen den VRMs 21a und 21b. Dadurch wird ebenfalls eine kompakte Bauweise des Bearbeitungskopfes 300 erreicht. Bemerkenswert ist hier, dass sich Abschnitte des optischen Pfads 30 des Bearbeitungslaserstrahls 104 kreuzen. Vorteil dieses Beispiels ist, dass der plane Spiegel 112, der für Beobachtungslicht transparent sein kann, gut zugänglich für eine Prozessbeobachtung ist. Eine optionale Prozessbeobachtungseinheit 17, in Fig. 5 gestrichelt dargestellt, kann z.B. aus einer Kamera und/oder einer Photodiode bestehen und an einer weiteren Schnittstelle 106 des Gehäuses 102 vorgesehen sein. Der optische Pfad 30 zwischen der Schnittstelle 107 und der Austrittsöffnung 108 liegt in diesem Beispiel bei 1700 mm. Auch mit dieser Bauform des Bearbeitungskopfes 300 beträgt die Ausdehnung D des Gehäuses 102, d.h. ohne Prozessbeobachtungseinheit 17, weniger als 500 mm. Das Verhältnis der Gesamtlänge zu der Ausdehnung D parallel zur zentralen Achse Ader Austrittsöffnung 108 liegt somit bei 3,4. Auch hier beträgt das Verhältnis der Ausdehnung D zur Länge AL ungefähr 0,55.

Die Abbildungseigenschaften der Bearbeitungsköpfe 200 und 300 der Fig. 4 und 5 entsprechen den Abbildungseigenschaften des Bearbeitungskopfes 100 der Fig. 3a bzw. 3b.

Abschliessend sei erwähnt, dass die Beispiele der Bearbeitungsköpfe 100 bis 300 der Fig. 3a bis 5, in denen anstelle von parallel zum Bearbeitungslaserstrahl 104 verschiebbaren Linsen die adaptiven VRMs 21a und 21b eingesetzt werden, den weiteren Vorteil mit sich bringen, dass die Fokuslage und die Magnifikation des Bearbeitungslaserstrahls 104 deutlich schneller verändert werden können. Durch eine Änderung der Krümmung und somit des Krümmungsradius eines VRM lassen sich nämlich die Fokuslage und die Magnifikation deutlich schneller verändern, als durch Verschieben eines transmissiven optischen Elementes, wie eine Linse, parallel zum Bearbeitungslaserstrahl 104. Ein Vollhub eines VRM, d.h. ein Ändern des Krümmungsradius von -3 m bis +3 m dauert weniger als 30 ms. Somit kann eine Änderung der Magnifkation von 1,8 zu 3,7 innerhalb von 30 ms durchgeführt werden. Ebenso kann die Fokuslage von -20 mm auf +60 mm innerhalb von 30 ms verändert werden. Ein Bearbeitungskopf mit parallel zum Bearbeitungslaserstrahl verschiebbaren Linsen hingegen braucht für solche Veränderungen bis zu 8 bis 10 mal länger.

In weiteren Abwandlungen der vorstehenden Beispiele können zwischen den VRMs 21a und 21b zusätzliche VRMs als weitere ortsfeste verformbare Spiegel vorgesehen werden. In derartigen Abwandlungen, die mehr als zwei VRMs enthalten, kann der Abschnitt des optischen Pfades 30 zwischen den VRMs 21a und 21b weiter verkürzt werden, und eine höhere Kompaktheit des Bearbeitungskopfes kann erzielt werden. In diesen Abwandlungen kann der Abschnitt des optischen Pfades 30 zwischen benachbart angeordneten VRMs jeweils eine Länge im Bereich von 150 mm bis 450 mm, bevorzugt 280 mm bis 350 mm, besitzen.

### Bezugszeichenliste

- 1: Laserbearbeitungskopf
- 2: Transportfaser
- 3a, 3b: Linsenverschiebungsmechanik
- 4: Laserstrahl
- 5a: Kollimationslinse
- 5b: Fokussierlinse
- 7: Bearbeitungsort
- 8: Austrittsöffnung
- 9: Schutzglas
- 10: Laserbearbeitungsvorrichtung
- 12: Werkstück
- 17: Prozessbeobachtungseinheit
- 21a: verformbarer Spiegel, VRM
- 21b: verformbarer Spiegel, VRM
- 25: Oberfläche
- 26: Membran
- 27: Fluidraum
- 28: Aktuator
- 29: Steuereinheit
- 30: optischer Pfad
- 100: Laserbearbeitungskopf
- 102: Gehäuse
- 103: optisches System
- 104: Bearbeitungslaserstrahl
- 104a: Fokus
- 105a: Kollimationslinse
- 105b: Fokussierlinse
- 107: Schnittstelle
- 108: Austrittsöffnung
- 109: Schutzglas
- 110: Faserendkappe
- 111: Transportfaser
- 112: Umlenkspiegel
- 116: Bereich
- 116a: Bereich
- 116b: Bereich
- 116c: Bereich
- 120: Laserquelle
- 200: Laserbearbeitungskopf
- 230a: Teilpfad
- 230b: Teilpfad
- 230c: Teilpfad
- 300: Laserbearbeitungskopf
- 330a: Teilpfad
- 330b: Teilpfad
- 330c: Teilpfad

## Patentansprüche

1. Laserbearbeitungsvorrichtung zur Laserbearbeitung eines Werkstücks (12), insbesondere zum Laserschneiden, beinhaltendeinen Laserbearbeitungskopf (100; 200; 300) mit
- einem Gehäuse (102), das eine Schnittstelle (107) zum Ankoppeln einer Laserquelle für einen Bearbeitungslaserstrahl (104) und eine Austrittsöffnung (108) für den Bearbeitungslaserstrahl(104) aufweist; und
- einem optischen System (103) zum Formen des Bearbeitungslaserstrahls und Führen des Bearbeitungslaserstrahls auf einem optischen Pfad (30) mit einer Gesamtlänge zwischen der Schnittstelle (107) und der Austrittsöffnung (108);
wobei
das Gehäuse (102) das optische System (103) umschließt und eine räumliche Ausdehnung (D) parallel zu einer zentralen Achse (A) der Austrittsöffnung (108) besitzt; das optische System (103) einen ersten ortsfesten, verformbaren Spiegel (21a), und einen zweiten ortsfesten, verformbaren Spiegel (21b), aufweist, die jeweils derart angeordnet sind, dass sie den Bearbeitungslaserstrahl jeweils in einem Winkel (α1, α2) umlenken; und
das Verhältnis der Gesamtlänge des optischen Pfades (30) zwischen der Austrittsöffnung (108) und der Schnittstelle (107) zum Ankoppeln der Laserquelle zur räumlichen Ausdehnung (D) des Gehäuses (102) parallel zu der zentralen Achse (A) der Austrittsöffnung (108) im Bereich von 2 bis 4,5 liegt.

2. Vorrichtung nach Anspruch 1,
wobei die Gesamtlänge des optischen Pfades (30) im Bereich von 1000 mm bis 2500 mm, bevorzugt 1400 mm bis 1900 mm, liegt; und/oder
wobei die räumliche Ausdehnung (D) des Gehäuses (102) parallel zu der zentralen Achse (A) der Austrittsöffnung (108) im Bereich von 300 mm bis 700 mm, bevorzugt 400 mm bis 600 mm, liegt; und/oder
wobei ein Krümmungsradius des ersten Spiegels (21a) und/oder ein Krümmungsradius des zweiten Spiegels (21b) im Bereich von -1,5 m bis +1,5 m liegt; und/oder wobei der Abschnitt des optischen Pfades (30) zwischen dem ersten und dem zweiten verformbaren Spiegel eine Länge (AL) von mindestens 300 mm, bevorzugt im Bereich von 700 mm bis 1100 mm besitzt; und/oder
wobei der Winkel (α1, α2) ein spitzer Winkel im Bereich von 5,5° bis 12,5° ist.

3. Vorrichtung nach einem der vorstehenden Ansprüche,
wobei das Verhältnis der räumlichen Ausdehnung (D) des Gehäuses (102) parallel zu der zentralen Achse (A) der Austrittsöffnung (108) zur Länge (AL) des Abschnitts des optischen Pfades (30) zwischen dem ersten und dem zweiten verformbaren Spiegel (21a, 21b) im Bereich von 0,33 bis 0,9 liegt.

4. Vorrichtung nach einem der vorstehenden Ansprüche,
wobei der erste und der zweite verformbare Spiegel (21a, 21b), insbesondere Aktuatoren (28) des ersten und des zweiten verformbaren Spiegels, zum Verstellen des jeweiligen Krümmungsradius individuell und/oder aufeinander abgestimmt ansteuerbar ausgebildet sind; und/oder
wobei der erste und/oder der zweite verformbare Spiegel (21a, 21b) derart verformbar sind, dass mindestens ein Element ausgewählt aus der Divergenz des Bearbeitungslaserstrahls und dem Durchmesser des Bearbeitungslaserstrahls verändert wird.

5. Vorrichtung nach einem der vorstehenden Ansprüche,
wobei mindestens ein Element ausgewählt aus dem optischen System (103) und einer Steuereinheit (29) des Laserbearbeitungskopfes derart ausgebildet ist, dass durch Verstellen mindestens eines der Krümmungsradii des ersten und des zweiten verformbaren Spiegels, insbesondere ausschließlich durch Verstellen mindestens eines der Krümmungsradii des ersten und des zweiten verformbaren Spiegels, eine Fokuslage des Bearbeitungslaserstrahls und eine Magnifikation des optischen Systems (103) modifiziert wird; und/oder
wobei mindestens ein Element ausgewählt aus dem optischen System (103) und der Steuereinheit (29) derart ausgebildet ist, dass eine Veränderung der jeweiligen Krümmung des ersten und/oder des zweiten Spiegels (21a, 21b) mit mindestens 2,3 (m s)⁻¹ erfolgt.

6. Vorrichtung nach einem der vorstehenden Ansprüche,
wobei mindestens ein Element ausgewählt aus dem optischen System (103) und der Steuereinheit (29) derart ausgebildet ist, dass die Fokuslage des Bearbeitungslaserstrahls am Bearbeitungsort (7) in einem Bereich von -90 mm bis +110 mm, bevorzugt -40 mm bis +40 mm, verstellbar ist, und/oder die Magnifikation des optischen Systems in einem Bereich von 1,4 bis 4,8, bevorzugt 1,7 bis 3,8, verstellbar ist.

7. Vorrichtung nach einem der vorstehenden Ansprüche,
wobei das optische System (103) ausschließlich optische Elemente enthält, die jeweils, insbesondere in Fortpflanzungsrichtung des Bearbeitungslaserstrahls, ortsfest sind; und/oder
wobei das optische System (103) ein oder mehrere weitere optische Elemente enthält, ausgewählt aus einem Spiegel, einem adaptiven Spiegel, einem Umlenkspiegel (112), einer Linse (105a, 105b) und einer Faserendkappe, die jeweils ortsfest sind; und/oder wobei zwischen dem ersten und dem zweiten Spiegel (21a, 21b) mindestens ein optisches Element ausgewählt aus mindestens einem ortsfesten planen Spiegel, mindestens einem ortsfesten adaptiven Spiegel und mindestens einem weiteren ortsfesten, verformbaren Spiegel vorgesehen ist; und/oder
wobei der Abschnitt des optischen Pfades (30) zwischen dem mindestens einen weiteren verformbaren Spiegel und mindestens einem benachbart angeordneten Spiegel ausgewählt aus dem ersten verformbaren Spiegel, dem zweiten verformbaren Spiegel und einem anderen der weiteren verformbaren Spiegel jeweils eine Länge im Bereich von 150 mm bis 450 mm besitzt.

8. Vorrichtung nach einem der vorstehenden Ansprüche,
wobei durch Vorsehen mindestens eines ortsfesten optischen Elements zwischen dem ersten und dem zweiten Spiegel (21a, 21b) der optische Pfad (30) zwischen dem ersten und dem zweiten Spiegel in optische Teilpfade (230a, 230b, 230c; 330a, 330b, 330c) unterteilt ist.

9. Vorrichtung nach einem der vorstehenden Ansprüche,
wobei an der Schnittstelle (107) eine Laserquelle (120) für den Bearbeitungslaserstrahl angekoppelt ist; und/oder
wobei das Gehäuse (102) weitere Schnittstellen (106) zum Ankoppeln weiterer Bauteile, insbesondere eine Kamera zur Prozessbeobachtung und/oder eine Lichtquelle für ein Beleuchtungslicht, aufweist.

10. Laserbearbeitungsverfahren zur Laserbearbeitung eines Werkstücks (12), insbesondere zum Laserschneiden, mit einer Laserbearbeitungsvorrichtung nach einem der vorstehenden Ansprüche,
mit den Schritten
Erzeugen eines Bearbeitungslaserstrahls (104) mit einer an der Schnittstelle (107) des Gehäuses (102) des Laserbearbeitungskopfs (100; 200; 300) angekoppelten Laserquelle (120);
Formen des Bearbeitungslaserstrahls (104) und Führen des Bearbeitungslaserstrahls mit dem optischen System (103) auf dem optischen Pfad (30) mit einer Gesamtlänge zwischen der Schnittstelle (107) und der Austrittsöffnung (108) des Laserbearbeitungskopfes;
Verstellen mindestens einen der Krümmungsradii des ersten ortsfesten, verformbaren Spiegels (21a) und des zweiten ortsfesten, verformbaren Spiegels (21b); Umlenken des Bearbeitungslaserstrahls (104) an dem ersten verformbaren Spiegel und dem zweiten verformbaren Spiegel jeweils in einem Winkel (α1, α2); und Bearbeiten des Werkstücks (12) mit dem Bearbeitungslaserstrahl (104).

11. Laserbearbeitungsverfahren nach Anspruch 10,
wobei das Verhältnis der Gesamtlänge des optischen Pfades zur räumlichen Ausdehnung (D) des Gehäuses (102) parallel zu der zentralen Achse (A) der Austrittsöffnung (108) im Bereich von 2 bis 4,5, bevorzugt 2,5 bis 4, liegt; und/oder
wobei der Abschnitt des optischen Pfades (30) zwischen dem ersten und dem zweiten verformbaren Spiegel eine Länge (AL) von mindestens 300 mm, bevorzugt im Bereich von 700 bis 1100 mm besitzt;; und/oder
wobei als der Winkel (α1, α2) ein spitzer Winkel im Bereich von 5,5° bis 12,5°, bevorzugt 7,5° bis 10,5°, gewählt wird oder voreingestellt ist.

12. Laserbearbeitungsverfahren nach Anspruch 10 oder 11,
wobei der erste und der zweite Spiegel (21a, 21b), insbesondere Aktuatoren (28) des ersten und des zweiten Spiegels, zum Verstellen des jeweiligen Krümmungsradius individuell und/oder aufeinander abgestimmt, insbesondere mit der Steuereinheit (29), angesteuert werden; und/oder
wobei der erste und/oder der zweite verformbare Spiegel derart verformt werden, dass mindestens ein Element ausgewählt aus der Divergenz des Bearbeitungslaserstrahls und dem Durchmesser des Bearbeitungslaserstrahls verändert wird.

13. Laserbearbeitungsverfahren nach einem der Ansprüche 10 bis 12,
wobei durch Verstellen mindestens eines der Krümmungsradii des ersten und des zweiten verformbaren Spiegels (21a, 21b), insbesondere ausschließlich durch Verstellen mindestens eines der Krümmungsradii des ersten und des zweiten verformbaren Spiegels, eine Fokuslage des Bearbeitungslaserstrahls (104) und eine Magnifikation des optischen Systems (103) modifiziert wird; und/oder
wobei eine Veränderung der jeweiligen Krümmung des ersten und/oder des zweiten Spiegels (21a, 21b) mit mindestens 2,3 (m s)⁻¹ erfolgt.

14. Laserbearbeitungsverfahren nach einem der Ansprüche 10 bis 13,
wobei die Fokuslage des Bearbeitungslaserstrahls (104) in einem Bereich von -90 mm bis +110 mm, bevorzugt -40 mm bis +40 mm, verstellt wird, und/oder die Magnifikation des optischen Systems (103) in einem Bereich von 1,4 bis 4,8, bevorzugt 1,7 bis 3,8, verstellt wird.

15. Computerprogrammprodukt, beinhaltend ein oder mehrere Programmmodule, die bewirken, dass die Vorrichtung nach einem der Ansprüche 1 bis 9 Schritte des Laserbearbeitungsverfahrens nach einem der Ansprüche 10 bis 14 ausführt, insbesondere wenn die Programmmodule in eine Speichereinrichtung der Vorrichtung geladen werden.
